# EUROPEAN PATENT SPECIFICATION

(11) **EP 3 707 196 B1**
(45) Date of publication and mention of the grant of the patent: **06.04.2022**
(21) Application number: 18818986.4
(22) Date of filing: 06.11.2018
(51) Int. Cl.: C08J 5/18, C08J 9/00, C08J 9/04, C08L 23/08, B32B 5/18, B32B 5/32, B32B 27/06, B32B 27/32, C08J 9/08

(54) **FOAMED POLYETHYLENE ARTICLE**
GESCHÄUMTER POLYETHYLENGEGENSTAND
COMPOSITIONS DE POLYÉTHYLÈNE EXPANSÉ

(30) Priority: 06.11.2017 CN 201711075701
(43) Date of publication of application: 16.09.2020
(73) Proprietor: Abu Dhabi Polymers Company Limited (Borouge) LLC, Abu Dhabi (AE); Borealis AG, 1020 Vienna (AT)
(72) Inventor: VAN HOUCKE, Daniel, P.O. Box 6925 Abu Dhabi (AE); ANTONY, Nisha, P.O. Box 6925 Abu Dhabi (AE); TIONG KHOON, Ong, Singapore 049145 (SG); DUAN, Xinrong, Pudong District Shanghai 201203 (CN); ZHOU, Xin, Pudong District Shanghai 201203 (CN)
(74) Representative: Dehns
(86) International application number: PCT/EP2018/080348
(87) International publication number: WO 2019/086713

(56) References cited:
- WO-A1-99/65976
- WO-A1-2005/007729
- WO-A1-2013/140035
- WO-A1-2016/179754
- US-A1- 2011 262 686

## Description

This invention relates to a foamed article, such as a foamed polyethylene film or sheet. In particular, the invention relates to the use of a linear low density polyethylene (LLDPE) in combination with a low density polyethylene (LDPE) and a hydrocarbon resin to prepare a foamed article, such as a foamed film or sheet or a foamed layer of a film of sheet. This combination of components leads to a foamed article with desirable properties, in particular improved surface properties and excellent barrier properties.

### Background

Foaming is a known technology which was firstly implemented in moulding where the thickness of the objects is sufficiently high to allow foaming to occur. Foaming is an interesting alternative for the polymer manufacturer as foamed articles can enable a cost reduction, weight reduction, insulation improvement, shorter injection cycles and other advantages.

Polyethylene foam can be prepared by extruding a molten polyethylene together with a foaming agent. The foaming agent can be either a gas or a product that will decompose at a given temperature and release a gas. At a high enough temperature and under pressure, the foaming agent will dissolve in the melted polymer and disperse. At the exit of the die, when the pressure drops, the incompatibility of the gas in the polymer will create bubbles that are called cells. As the polymer cools down to its solid phase, the growth of the cells is limited.

During foaming, cells originate and grow to a size determined by the equilibrium of pressure of the propellant versus the containing melt strength of the polymer, thus forming a cellular polymeric structure.

Foaming has also been used in the manufacture polyolefin films. This allows a reduction in the density of the film and therefore allows the use of less plastic for a given packaging solution. Foaming is, however, more challenging in the context of film preparation than moulding as there is no mould to contain the extruded melt and assure a smooth surface. The use of a mould helps keep a smooth article surface despite the presence of bubbles in the polymer. WO 99/65976 and WO 2005/007729 for example refer to the provision of foamed polyethylene layers or films for use as packaging articles.

In film and sheet applications, foaming has faced many difficulties linked to the rough surface that is formed. This is often called an "orange peel" effect. This is a particular problem in packaging solutions where the film needs to be printed as it leads to unclear pictures or text.

A further issue with foamed films and sheets is that smaller thicknesses compared to moulding leads to a serious drop in mechanical properties. Processability is also challenging. Conventional foamed films often do not have sufficiently good appearance and mechanical properties to find their place on the market.

Regarding the foaming itself, the dispersion of the cells and the size of the cells are important to limit the above mentioned drawbacks. A uniform distribution of cells and a low size per cell may reduce orange peel effect and minimise the reduction in the mechanical properties. Control of these parameters will depend on several characteristics including the polymer(s) containing the foaming agent, the foaming agent itself and the processing conditions.

A further problem with foamed films is their reduced barrier properties. Foamed films tend to offer much weaker barrier properties to the likes of oxygen than non-foamed films. One major application of polyethylene films is food packaging. It is important to provide a film with sufficient oxygen barrier property for the packaging operation in question. It will be appreciated that the barrier properties required vary depending on the type of food to be packaged, on the desired storage life, and on the environmental conditions like temperature and oxygen partial pressure and so on.

To date, many foamed polyethylene products have failed to provide the minimum requirements for the packaging market.

In order for a foaming process to lead to valuable articles such as films and sheets, the polymer bubbles that are formed during the foaming process need to be stretchable yet limited in size. It will be clear therefore that a polymer with excellent melt strength is required to allow the formation of stretchable bubbles that can adopt an even size distribution.

### Summary of Invention

It is an object of the present invention to provide a foamed polyethylene composition with improved oxygen barrier property.

It is an object of the present invention to provide a foamed polyethylene composition with attractive surface properties, in particular which allow ready printing thereon.

The present inventors have now found that the combination of a linear low density polyethylene (LLDPE) such as a multimodal LLDPE with an LDPE and a hydrocarbon resin can provide an ideal composition for foaming. In particular, we demonstrate that the addition of a polyterpene to the polymer blend improves the polymer melt so that a better cell structure is formed and hence a smoother product. Moreover, the hydrocarbon resin reinforces the polymer composition leading to improved barrier properties.

The multimodal LLDPE/LDPE/hydrocarbon resin composition provides melt strength and stretchability so that the composition can be foamed without breaks to form an article, e.g. a foamed film or sheet. The composition allows the formation of cells with even structure and the foamed articles, such as the foamed sheets and films of the invention have sufficient mechanical properties for the foamed packaging market. Moreover, the processability of the polymer composition of the invention is excellent during the foaming process.

Without wishing to be limited by theory, it is believed that blending the LLDPE with LDPE and hydrocarbon resin has a synergetic effect on the cell structure and the quality of the foaming. Whilst the examples concentrate on the use of chemical foaming agents it is envisaged that the results will extend to other foaming technologies such as physical foaming (with gaseous foaming agents). Moreover, the combination offers foamed sheets and films with excellent barrier properties, e.g. very low oxygen transmission rate.

Thus viewed from one aspect the invention provides a polymer composition comprising 40 to 80 wt% of a linear low density polyethylene (LLDPE), 10 to 50 wt% of a low density polyethylene (LDPE), 2 to 49.9 wt% of at least one hydrocarbon resin and 0.1 to 15.0 wt% of foaming agent component based on the total amount (100wt%) of the polymer composition.

The invention also provides a polymer composition comprising, such as consisting of:
(I) a first composition comprising 40 to 80 wt% of a linear low density polyethylene, 10 to 50 wt% of an LDPE and 2 to 50 wt% of at least one hydrocarbon resin based on the weight based on the total amount (100wt%) of the polymer composition; and
(II) 0.1 to 15.0 wt% of a foaming agent component based on the weight of the first composition.

In a preferred embodiment of the invention, the polymers of the polymer composition are selected from said LLDPE and LDPE. I.e. it is preferred that LLDPE and LDPE are the sole polymeric components present in the polymer composition.

Optionally, and preferably, the polymer composition may comprise additives, typically conventional additives, used in conventional amounts. Additives may form 0 to 10 wt% of the polymer composition, such as 0 to 5 wt%, preferably 0.01 to 5.0 wt%. Some of optional additives may be in form of well-known masterbatches and may be carried on a polymeric carrier. Any polymeric carrier is excluded from the above definition polymeric components, but forms part of the additive package.

Viewed from another aspect the invention provides a foamed article. In particular, the invention provides a foamed article comprising a polymer composition comprising 40 to 80 wt% of a linear low density polyethylene, 10 to 50 wt% of an LDPE, 2 to 50 wt% of at least one hydrocarbon resin and 0 to 10 wt% of optional additives based on the total amounts (100wt%) of the polymer composition.

Viewed from another aspect the invention provides a foamed layer element comprising 40 to 80 wt% of a linear low density polyethylene, 10 to 50 wt% of an LDPE and 2 to 50 wt% of at least one hydrocarbon resin. Optional additives may also be present in an amount of 0 to 10 wt%, as defined above.

The foamed layer element can be a foamed monolayer film or sheet or one or more foamed layer(s) of a multilayer film or a multilayer sheet.

Thus viewed from another aspect the invention provides a monolayer foamed film or sheet comprising 40 to 80 wt% of a linear low density polyethylene, 10 to 50 wt% of an LDPE and 2 to 50 wt% of at least one hydrocarbon resin. Optional additives may also be present in an amount of 0 to 10 wt%, as defined above.

Viewed from another aspect the invention provides multilayer film or sheet wherein at least one layer of said film or sheet is foamed and wherein the foamed layer comprises 40 to 80 wt% of a linear low density polyethylene, 10 to 50 wt% of an LDPE and 2 to 50 wt% of at least one hydrocarbon resin. Optional additives may also be present in an amount of 0 to 10 wt%, as defined above.

As mentioned above, any polymer composition, article, element, film or sheet of the invention may comprise conventional polymer additives. Optionally, some or all of those additives may be carried on a support medium (i.e. a carrier) which can be a carrier happen to be a polymer or hydrocarbon resin as well known in the art. Any optional carrier of such additives are not to be included in the calculation of the wt% amount of the multimodal LLDPE/LDPE/hydrocarbon resin but are regarded as part of the additive package present.

Alternatively viewed the invention provides multilayer film or sheet wherein at least one layer of said film or sheet is foamed and wherein the foamed layer consists of a foamed polymer composition comprising 40 to 80 wt% of a linear low density polyethylene, 10 to 50 wt% of an LDPE and 2 to 50 wt% of at least one hydrocarbon resin based on the total amount (100wt%) of the polymer composition.

In an alternative embodiment, the invention provides a monolayer foamed film or sheet consisting of a foamed polymer composition comprising 40 to 80 wt% of a linear low density polyethylene, 10 to 50 wt% of an LDPE and 2 to 50 wt% of at least one hydrocarbon resin based on the total amount (100wt%) of the polymer composition.

Viewed from another aspect the invention provides a method of manufacturing a foamed article comprising:
providing a first polymer composition comprising 40 to 80 wt% of a linear low density polyethylene, 10 to 50 wt% of an LDPE and 2 to 50 wt% of at least one hydrocarbon resin;
adding to said first composition 0.1 to 15 wt% of a foaming agent component based on the weight of the first composition to form a second composition;
processing the second composition by passing the second composition through an extruder and a die to form a foamed article.

Viewed from another aspect the invention provides a process for manufacturing a foamed film or sheet comprising:
providing a first polymer composition comprising 40 to 80 wt% of a linear low density polyethylene, 10 to 50 wt% of an LDPE and 2 to 50 wt% of at least one hydrocarbon resin;
adding to said first composition 0.1 to 15 wt% of a foaming agent component based on the weight of the first composition to form a second composition;
processing the second composition by passing the second composition through an extruder and a die to form a foamed sheet or film.

### Detailed Description of Invention

The present invention relates to the formation of a foamed article, preferably a foamed film or sheet comprising a foamed blend of LLDPE, an LDPE and a hydrocarbon resin. Films of the invention are preferably blown films, manufactured using conventional film blowing techniques.

A foamed layer of a foamed article is produced in the presence of a foaming agent in order to introduce gas into the extruded polymer melt and hence cells into the final foamed article. Foamed articles will have a lower density than the corresponding unfoamed article. The reduction in density is ideally at least 50 kg/m³, such as at least 100 kg/m³.

Whilst the invention will be primarily described in relation to films, it will be appreciated that the preferred embodiments below also apply to the sheet aspects of the invention or articles in general.

### LLDPE

The polymer composition or foamed article of the invention comprises an LLDPE, especially a multimodal LLDPE. The term "multimodal" means, if otherwise not specified, multimodality with respect to molecular weight distribution and includes bimodal polymers.

Usually, a polyethylene comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE, there is by definition a lower molecular weight component (LMW) and a higher molecular weight component (HMW). The LMW component has a lower molecular weight than the higher molecular weight. Typically the difference is at least 5000 g/mol. However, the difference in Mw is more easily observed through an analysis of the MFR of the components.

In a multimodal LLDPE of use in this invention at least one of the LMW and HMW components is a copolymer of ethylene. Preferably, at least HMW component is an ethylene copolymer. It is also possible for the lower molecular weight (LMW) component to be an ethylene copolymer. Alternatively, if one of the components is a homopolymer, then LMW is the preferably the homopolymer. The combination of a LMW homopolymer and HMW ethylene copolymer is especially preferred.

The multimodal LLDPE may comprise up to 5.0 % by weight of a well-known polyethylene prepolymer (obtainable from a prepolymerisation step as well known in the art). In case of such prepolymer, the prepolymer component is comprised in one of LMW and HMW components, preferably LMW component, as defined above.

The term "ethylene copolymer" is used in this context to encompass polymers comprising repeat units deriving from ethylene and at least one other C₃₋₁₂ alpha olefin monomer. Ethylene obviously forms the major monomer unit present. Preferred copolymers are binary and comprise a single comonomer or are terpolymers and comprise two or three comonomers. Preferably, one comonomer is present in the LLDPE of the invention.

The LLDPE may have a density of 905 to 940 kg/m³, preferably 915-935 kg/m³.

The melt flow rate, MFR₂ of the LLDPE is preferably in the range 0.01 to 20 g/10min, e.g. 0.05 to 10 g/10min, preferably 0.1 to 6.0 g/10min.

It is particularly preferred if the LLDPE has a density of 905 to 940 kg/m³, preferably 915-935 kg/m³ and an MFR₂ in the range 0.01 to 20 g/10min, e.g. 0.05 to 10 g/10min, preferably 0.1 to 6.0 g/10min.

The MFR₂₁ of the LLDPE may be in the range 5 to 500, preferably 10 to 200 g/10min. The Mw of the LLDPE may be in the range 100,000 to 300,000, preferably 150,000 to 270,000.

It is a preferred feature that the multimodal LLDPE of the invention has a broad molecular weight distribution. This may be shown by the high MFR₂₁/MFR₂ value or a high Mw/Mn.

The MFR₂₁/MFR₂ of the multimodal LLDPE is preferably 50 to 200, such as 60 to 150, especially 70 to 120. This high value reflects the breadth of the molecular weight distribution.

The LLDPE, especially multimodal LLDPE, of the invention may have a broad molecular weight distribution of 10 or more, such as 10 to 50, especially the Mw/Mn of the LLDPE may be in the range 10 to 30, preferably 10 to 25. It is envisaged that the use of a broad Mw/Mn multimodal LLDPE provides additional melt strength and stretchability during the foaming process so that a foamed article such as a foamed film or sheet can be formed with a well dispersed cell structure of limited cell size and containing mainly closed cells. The combination of the broad Mw/Mn multimodal LLDPE and the LDPE has a synergistic effect which leads to improved cell structure after foaming, e.g. even cell structure.

The LLDPE may be formed from ethylene along with at least one C₃₋₁₂ alpha-olefin comonomer, e.g. 1-butene, 1-hexene or 1-octene. Preferably, the LLDPE is a binary copolymer, i.e. the polymer contains ethylene and one comonomer, or a terpolymer, i.e. the polymer contains ethylene and two or three comonomers. Preferably, the LLDPE comprises an ethylene hexene copolymer, ethylene octene copolymer or ethylene butene copolymer, especially an ethylene butene copolymer. The amount of comonomer present in the LLDPE is preferably 0.5 to 12 mol%, e.g. 2 to 10% mole, especially 4 to 8% mole.

Alternatively, comonomer contents present in the LLDPE may be 1.5 to 10 wt%, especially 2 to 8 wt%. The comonomer content can be determined by quantitative 13C nuclear magnetic resonance (NMR) spectroscopy after basic assignment (J. Randall JMS - Rev. Macromol. Chem. Phys., C29(2&3), 201-317 (1989).

As stated above a multimodal LLDPE comprises at least a LMW component and a HMW component.

The LMW component of the multimodal LLDPE preferably has a MFR₂ of at least 50, preferably 50 to 3000 g/10 min, more preferably 100 to 500 g/10 min. The molecular weight of the low molecular weight component should preferably range from 20,000 to 50,000, e.g. 25,000 to 40,000.

The density of the lower molecular weight component may range from 930 to 980 kg/m³, e.g. 940 to 970 kg/m³, more preferably 945 to 955 kg/m³ in the case of copolymer and 940 to 975 kg/m³, especially 960 to 972 kg/m³ in the case of homopolymer.

The lower molecular weight component preferably forms 30 to 70 wt%, e.g. 40 to 60% by weight of the multimodal LLDPE with the higher molecular weight component forming 70 to 30 wt%, e.g. 40 to 60% by weight.

The higher molecular weight component has a lower MFR₂ and a lower density than the lower molecular weight component.

The higher molecular weight component has preferably an MFR₂ of less than 1.0 g/10 min, preferably less than 0.5 g/10 min, especially less than 0.2 g/10min. I may have a density of less than 915 kg/m³, e.g. less than 910 kg/m³, preferably less than 905 kg/m³. The Mw of the higher molecular weight component may range from 100,000 to 1,000,000, preferably 250,000 to 500,000.

In any copolymeric HMW component, at least 0.25 mol-%, preferably at least 0.5 mol-%, e.g. at least 1-mol%, such as up to 10 mol-%, of repeat units derive from the comonomer. Ethylene forms the majority of the HMW component.

It will be appreciated that the LLDPE component could be formed by a mixture of LLDPEs as herein described.

It is preferred if the LLDPE of the invention is one manufactured using a Ziegler Natta catalyst. LLDPEs of use in the invention, preferably films/sheets of the invention are not new and can be purchased from polyolefin suppliers such Borouge, Borealis, Exxon, Basell, Dow etc.

### LDPE

The article, preferably film/sheet of the invention also comprises a low density polyethylene. The term low density polyethylene is a term of this art and defines a polyethylene polymer prepared in a high pressure process using typically a radical initiatior(s), like peroxide(s), as is well known in the art. LDPE polymers and LLDPE polymers are not the same as is well known to the person skilled in this art.

The LDPE of use in the invention can be an LDPE copolymer or an LDPE homopolymer. Preferably, it is an LDPE homopolymer.

The LDPE preferably has a MFR₂ in the range 0.1-20 g/10 min, more preferably 0.3-10 g/10 min, still more preferably 0.5-5.0 g/10 min. The density of the LDPE is preferably 905-940 kg/m³, more preferably 910 to 937 kg/m³, e.g. 915 to 935 kg/m³.

It will be appreciated that the LDPE component of the foamed material could be formed by a blend of two or more LDPEs meeting the requirements of the invention.

LDPEs of use in the invention are not new and can be purchased from polyolefin suppliers such as Borouge, Borealis, Exxon, Basell, Dow etc.

In the foamed article, such as foamed layer element or polymer composition of use in the invention, there may be at least 10 wt% such as 10 to 50 wt%, preferably 15 to 40 wt%, especially 15 to 35 wt% of the LDPE. Preferably, in the foamed layer element or polymer composition of use in the invention there is 15 to 30 wt%, such as 15 to 25 wt% especially 18 to 23 wt% of the LDPE.

The LLDPE preferably forms at least 40 wt%, such as 40 to 70 wt%, preferably 45 to 70 wt%, especially 50 to 70 wt% of the foamed layer element or polymer composition. Preferably, in the polymer composition or foamed article of use in the invention there is 50 to 65 wt% of the LLDPE, such as 55 to 65 wt%, especially 58 to 63 wt%. Note that the foamed article, such as layer element or polymer composition of the invention can include other components such as additives, foaming agent decomposition products etc.

### Preparation of polymer

The LLDPE can be a commercially available product or produced in a known manner according to or analogously to conventional polymerisation processes described in the literature of polymer chemistry.

Multimodal (e.g. bimodal) polymers can be made by mechanical blending two or more, separately prepared polymer components or, preferably, by *in-situ* blending in a multistage polymerisation process during the preparation process of the polymer components. Both mechanical and in-situ blending is well known in the field.

Accordingly, preferred multimodal LLDPE polymers, are prepared by in-situ blending in a multistage, i.e. two or more stage, polymerization or by the use of two or more different polymerization catalysts, including multi- or dual site catalysts, in a one stage polymerization.

Preferably the multimodal LLDPE is produced in at least two-stage polymerization using the same catalyst, e.g. a Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal LLDPE is preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

Unimodal LLDPEs can be prepared in a single step process following the protocols above.

The LLDPE may be made using any conventional catalyst, such as a chromium, single site catalysts, including metallocenes and non-metallocenes as well known in the field. Preferably, a Ziegler-Natta catalyst is used.

Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

Conventional cocatalysts, supports/carriers, electron donors etc can be used.

A LDPE may be prepared according to any conventional high pressure polymerisations (HP) process in a tubular or autoclave reactor using a free radical formation. Such HP processes are very well known in the field of polymer chemistry and described in the literature.

### Hydrocarbon resin

The polymer composition or foamed article of the invention also contains a hydrocarbon resin such as a hydrogenated hydrocarbon resin. The term "hydrocarbon resin" has a generally acknowledged and well-known meaning in the art. Hydrocarbon resins are commercially available products based on C and H atoms only.

The hydrocarbon resin preferably has a softening point of 200 °C or less (ASTM-E28), preferably of 180 °C or less. The softening point of the hydrocarbon resin is preferably above 70 °C.

The hydrocarbon resin preferably has a weight average molecular weight of 500-5,000 g/mol, preferably of 700-3,000 g/mol.

The hydrocarbon resin preferably has a melt viscosity of 80-400 mPa.s at 200 °C, more preferably of 100-400 mPa.s at 200 °C, still more preferably of 150-400 mPa.s at 200 °C.

The hydrocarbon resin preferably has a weight average molecular weight of 500-5,000 g/mol, preferably of 700-3,000 g/mol, and has a melt viscosity of 80-400 mPa.s at 200 °C, more preferably of 100-400 mPa.s at 200 °C, still more preferably of 150-400 mPa.s at 200 °C.

The hydrocarbon resin is preferably amorphous.

The hydrocarbon resin is preferably additionally characterized by a glass transition temperature of 0-100 °C, more preferably of 40-90 °C.

The hydrocarbon resin can be obtained from a natural source, i.e. from nature, like a distillate of a fractionation process of an inorganic material or distillate or extract of organic, like plant, material, or obtainable synthetically.

According to one embodiment, the hydrocarbon resin comprises an aliphatic resin, an aromatic resin, an aliphatic/aromatic copolymer resin, or mixtures thereof. Aliphatic can be unbranched or branched, or can be cycloaliphatic resins.

In one embodiment of the present invention the hydrocarbon resin is an aliphatic resin and comprises a C5 monomer based resin and/or a dicyclopentadiene monomer based resin. Accordingly, C5 monomer based resin is a polymerisation product of C5 monomer(s), and dicyclopentadiene monomer based resin is a polymerisation product of dicyclopentadiene monomer. Preferably, in this embodiment the C5 monomer based resin and/or a dicyclopentadiene monomer based resin is/are the major component (more than 50 wt%, preferably more than 60 wt%, preferably more than 80 wt%, based on the C5 monomer based resin and/or a dicyclopentadiene monomer based resin.

The C5 monomer can include, for example, 1-pentene, isoprene, cyclopentadiene, or 1,3-pentadiene monomers, or any combinations thereof.

In another embodiment of the invention the aliphatic resin as the hydrocarbon resin comprises a mixture of alkanes, such as mixture of pentane.

In a further embodiment of the present invention the aromatic resin as the hydrocarbon resin product, comprises a C9 monomer based resin, like an indene resin, a coumarone resin, a styrene resin or a phenol resin, such as alkyl-phenol and terpene-phenol resins, and mixtures thereof. Accordingly, C9 monomer based resin is a polymerisation product of C9 monomer(s). Preferably, in this embodiment the C9 monomer based resin is the major component (more than 50 wt%, preferably more than 60 wt%, preferably more than 80 wt%, based on the aromatic resin of the component (B).

The C9 monomer can include, for example, indene, vinyl-toluene, alphamethylstyrene or beta-methylstyrene monomer(s).

Aromatic resins as the hydrocarbon resin, are typically based on more than one of the above-mentioned monomer units, and can be e.g. a coumarone-indene resin, a phenol-modified coumarone-indene resin, an alkyl-phenol resin or a terpene-phenol resin.

In one preferred embodiment of the present invention the hydrocarbon resin comprises, more preferably consists of, polymers derived from the polymerization of terpene units, sesquiterpene units, diterpene units and/or mixtures thereof. Such units can be aliphatic or alicyclic units, such as monocyclic or bicyclic units; or mixtures thereof. A typical example of this embodiment is a polyterpene resin derived from the catalytic polymerization of the bicyclic monoterpene pinene (β-pinene). The hydrocarbon resins of this embodiment can be obtained from nature, like plants, or produced by synthetic reaction.

Accordingly, in a further preferred embodiment of the present invention the hydrocarbon resin comprises pine resins, such as rosin (solid form of pine resin). The pine resin is typically a mixture composed mainly of terpenes and derivatives thereof. As mentioned above, pine resins can be plant-derived or of synthetic origin, i.e. the pine resins of this embodiment can be obtained from plants or produced by synthetic reaction. In this embodiment the hydrocarbon resin preferably consists of pine resins.

In a further embodiment, the hydrocarbon resin comprises a partially or fully hydrogenated hydrocarbon resin derived from any of the hydrocarbon resins mentioned above.

Preferably, the hydrocarbon resin comprises, preferably consists of, a partially or fully hydrogenated hydrocarbon resin derived from any of the hydrocarbon resins mentioned above.

A particularly preferred hydrocarbon resin is an aliphatic C5 monomer based resin which is fully hydrogenated.

A further particularly preferred hydrocarbon resin is an aromatic C9 monomer based resin.

The hydrocarbon resin can be in form of hydrocarbon resin as such (as is) or in form of a master batch, wherein the hydrocarbon resin is mixed with a carrier.

A hydrocarbon resin may be supplied as a master batch or may be supplied along with other components optionally present in the hydrocarbon resin. In such a scenario, the amount of the carrier in the masterbatch and/or other component(s) present is deemed part of the hydrocarbon resin for weight percentage purposes.

Hydrocarbon resins of use in the invention can be purchased from chemical suppliers and are available under trade names such as Arkon P-125.

Hydrocarbon resin may form at least 2 wt%, preferably 3 to 50 wt% of the foamed article or foamed layer element such as 5 to 50 wt%, more preferably 5 to 40 wt%, such as 10 to 35 wt%, e.g. 10 to 30 wt%, especially 15 to 25 wt% of the foamed article or foamed layer element.

Hydrocarbon resin may form at least 2 wt%, preferably 3 to 49.9 wt% of the polymer composition such as 5 to 49.9 wt%, more preferably 5 to 40 wt%, such as 10 to 35 wt%, e.g. 10 to 30 wt%, especially 15 to 25 wt% of the polymer composition.

The combined weight of the LDPE and hydrocarbon resin may form 15 to 70 wt%, more preferably 20 to 60 wt%, especially 30 to 50 wt% of the foamed article, foamed layer element or polymer composition. More preferably, the combined weight of the LDPE and hydrocarbon resin may form 35 to 50 wt%, such as 35 to 45 wt%, more preferably 37 to 42 wt% of the foamed article, foamed layer element or polymer composition.

It is convenient to prepare a masterbatch of the LDPE and hydrocarbon resin components for blending with the LLDPE. The weight ratio of LDPE to hydrocarbon resin in that masterbatch may be 2:1 to 1:2, especially 3:2 to 2:3, such as 1:1.

The use of hydrocarbon resin provides a better cell structure, where the cells are well separated from the polymer matrix. The hydrocarbon resin also maintains barrier properties, in particular low oxygen transmission rate (OTR). Without the hydrocarbon, the OTR of the foamed film increases by a significant amount relative to the unfoamed film. With hydrocarbon resin present, the OTR increase can be kept to a minimum. We can therefore realise the advantages of foamed films and sheets whilst maintaining acceptable OTR.

The use of hydrocarbon resin also maximises the mechanical properties. We are able to maintain good tensile properties in the foamed article. Finally, the use of hydrocarbon resin enables the formation of a smooth surface, closer to the non-foamed article, which is very important for a good printability of the packaging. The well-known "orange peel" effect which is typically formed by gas emission at the film surface is eliminated when hydrocarbon resin is used. These benefits can be achieved at commercially relevant foaming percentages such as 10 to 20 %.

### Foaming Agent Component

In order to prepare a foamed article such as a foamed film or sheet or a foamed layer within a film or sheet, a foaming agent component is required. The foaming agent can be a gas or a chemical that releases a gas during the extrusion process.

The advantages of the proposed composition apply for all foaming technologies like, for example:
1) Physical foaming that converts the pellets into foamed films or sheets using a gas;
2) Chemical foaming that converts the pellets into foamed film or sheet using a chemical that will release a gas.

In one embodiment therefore the foaming agent is simply a gas, typically an inert gas, that is added into the composition before extrusion. The foaming agent (or blowing agent) is preferably chemical and in solid or liquid form, preferably solid form. It is added to the first composition prior to the extrusion process. It will be appreciated that such a foaming agent decomposes to release gas that will dissolve inside the melted polymer and expand at the exit of the die, when the pressure drops. In the final foamed article therefore, the foaming agent is no longer present (other than potential degradation products, carrier etc). However, before the article is produced, a polymer composition exists which comprises LLDPE, LDPE, hydrocarbon resin and the foaming agent component and this composition forms a further aspect of the invention.

Viewed from another aspect the invention provides a polymer composition comprising 40 to 80 wt% of a linear low density polyethylene, 10 to 50 wt% of an LDPE, 2 to 49.9 wt% of at least one hydrocarbon resin and 0.1 to 15.0 wt% of foaming agent component. Optional additives may also be present in an amount of 0 to 10 wt%, as defined above. The preferred percentages of composition and foaming agent composition also apply to this embodiment of the invention.

In a preferred embodiment, the invention provides a polymer composition comprising 40 to 70 wt% of a linear low density polyethylene, 15 to 40 wt% of an LDPE, 10 to 30 wt% of at least one hydrocarbon resin and 0.1 to 15.0 wt% of foaming agent component

The foaming agent is often in particulate form and may be compounded with other substances, e.g. a carrier. In particular, the foaming agent may be in the form of a masterbatch and may be carried on a carrier, such as a polymeric carrier. As previously noted, the carrier is not counted towards the weight percentage of the other components of the polymer composition (LLDPE/LDPE/ hydrocarbon resin) but is deemed part of the additive package present.

The term foaming agent component will be used herein to define the supplied form of the foaming agent including components on which the foaming agent itself may be carried. In particular, the foaming agent component may be in the form of a masterbatch and may be carried on a carrier, such as a polymeric carrier.

The foaming agent itself could form 100% of the foaming agent component but typically, it may form 10 to 70 wt%, such as 15 to 50 wt% of the foaming agent component. The foaming agent component is typically purchased from suppliers. The datasheet will normally indicate the actual foaming agent content within the foaming agent component.

Appropriate chemical foaming agents can be any known organic or inorganic compounds that decompose at elevated temperatures releasing gases such as air, nitrogen, carbon dioxide, carbon monoxide or other hydrocarbons. Suitable organic foaming agents that may be utilized in this invention include sulfonylhydrazide, 5-phenyltetrazole, azodicarbonamide, citric acid and modified azocarbonamide, e.g. azodicarbonamide modified with zinc oxide, calcium carbonate or the like.

Suitable inorganic foaming agents include sodium borohydride, ammonium carbonate, sodium bicarbonate, and modified sodium bicarbonate, i.e., sodium bicarbonate modified with a proton donor such as citric acid. Further options as foaming agents of particular interest are azodicarbonamides and sodium bicarbonate foaming agents such as modified azodicarbonamide and modified sodium bicarbonate. Most preferred inorganic foaming agents include sodium borohydride, ammonium carbonate, sodium bicarbonate, and modified sodium bicarbonate, i.e. sodium bicarbonate modified with a proton donor such as citric acid. Where a product comprises a modifying agent, e.g. to encourage gas release during foaming, the modifying agent is considered a part of the foaming agent.

Considering the foaming agent component as supplied (i.e. including any carrier etc.), amounts added may range from 0.2 to 15.0 wt% based on the weight of LLDPE/LDPE/ hydrocarbon resin mixture, such as 0.5 to 10.0 wt%, especially 1.0 to 5.0 wt%, such as 1.0 to 3.0 wt%.

Alternatively viewed, the polymer composition may comprise 0.2 to 15.0 wt%, especially 0.5 to 10.0 wt%, such as 1.0 to 5.0 wt%, especially 1.0 to 3.0 wt% of the foaming agent component. The weight percentage of the LLDPE/LDPE and/or hydrocarbon resin component can be adjusted down to accommodate these percentages.

The decomposition products of the foaming agent that form the gaseous phase or gaseous cells of the foamed polyolefin include air, nitrogen, carbon dioxide, carbon monoxide and other hydrocarbons. Azodicarbonamides generate primarily nitrogen gas into the melt; modified bicarbonates generate primarily carbon dioxide gas into the melt. Ultimately, these gases expire after extrusion and are replaced by air within the film.

### Article, e.g. Films and sheets

The article of the invention is a foamed article and is preferably a foamed film or sheet. The foamed film or sheet of the invention may be monolayer or multilayer structure. The foamed film or sheet of the invention comprises one layer or at least 3 layers, such as 3 or 5 layers.

A particularly preferred multilayer film or sheet comprises at least three layers (e.g. 3 layers) in the following order:
(i) layer (A),
(ii) layer (B) and
(iii) layer (C).

It is preferred if layers A and C are outer layers. Layer B is a core layer. The polymer composition of layer (A) and the polymer composition of layer (C) can be same or different. The inner layer (C) is typically designed as a sealing layer and to have good slip properties. The outer layer (A) is often used for lamination. The (B) layer preferably comprises the foamed layer of the invention.

The foamed composition of the invention can be present in any layer of the film or sheet of the invention. It is preferred, however, that the foamed composition of the invention is present in the core layer (B) of the multilayer film or sheet. It is also possible however, for the foamed composition to be present in the (A) and/or (C) layer. This is not however preferred. It is preferred if layers (A) and (C) are not foamed where layer (B) is foamed.

Layers which do not comprise the foamed composition of the invention, e.g. the (A) or (C) layers may comprise other polyolefins, in particular, other polyethylenes. Polyethylenes of use are preferably LLDPE and LDPEs.

It is preferred if layers (A) and/or (C) comprise a multimodal LLDPE. In particular, the multimodal LLDPE in layers (A) and/or (C) may be the same polymer used in the polymer composition of the invention.

Alternatively, the (A) and/or (C) layers can comprise a composition of the invention but without foaming agent and hydrocarbon resin. (A) and/or (C) layers may therefore contain 40 to 90 wt% LLDPE and 10 to 60 wt% LDPE.

It is preferred if a multimodal LLDPE is the only polyolefin present in layers (A) and/or (C) (other than any polymers associated with additives, e.g. as carriers in masterbatch technology). Preferred layers (A) and/or (C) may comprise 95 wt% or more of a multimodal LLDPE.

In one embodiment, layers (A) and/or (C) comprise blend of two or more multimodal LLDPEs. In particular, a blend of a narrow Mw/Mn (less than 10) multimodal LLDPE and a broad Mw/Mn (10 or more) multimodal LLDPE.

Other options include an (A) layer comprising 50 to 90 wt% of a multimodal linear low density polyethylene and 10 to 50 wt% of an LDPE and a (C) layer comprising, e.g. consisting of, a multimodal linear low density polyethylene (or vice versa). Another option is an (A) and/or (C) layer comprising a blend of LLDPEs, e.g. a multimodal LLDPE and a unimodal LLDPE. In general, the polymers of the outer layers can be broadly selected.

It is preferred if layer (A) and/or layer (C) of the film of sheet is free of the hydrocarbon resin.

Other options include an (A) layer comprising 50 to 90 wt% of a multimodal linear low density polyethylene having an MFR₂₁/MFR₂ of 50 to 200 or an Mw/Mn of at least 10 and 10 to 50 wt% of an LDPE and a (C) layer comprising, e.g. consisting of, a multimodal linear low density polyethylene (or vice versa).

Another option is an (A) and/or (C) layer comprising a blend of LLDPEs, e.g. a multimodal LLDPE and a unimodal LLDPE. In general, the polymers of the outer layers can be broadly selected in accordance with the final required properties, like mechanical, surface, sealing, lamination.

In a multilayer film, one layer is foamed as defined herein. It is possible to foam some or all of the other layers however that is not preferred. Preferably, only one layer is foamed, i.e. the layer comprising the polymer composition of the invention, especially the core layer. It is preferred therefore if other layers are not foamed. In a monolayer construction, it will be clear that the single layer must be foamed.

Any foamed film layer may "consist of' the defined components, i.e. consists of the LDPE, the LLDPE and hydrocarbon resin. The term "consists of' used in relation to foamed film layer materials is meant to exclude only the presence of other polyolefin components. Thus said term does not exclude the presence of additives. Some of these additives may be masterbatches and hence carried on a polymeric carrier. Such masterbatches are not excluded.

Any article may contain standard additives such as antioxidants, UV stabilisers, acid scavengers, nucleating agents, anti-blocking agents, slip agents etc. as well as polymer processing agent (PPA). In one embodiment, talc is absent in any foamed article, or polymer composition of the invention such as foamed film or film layer of the invention.

The films or sheets of the invention may incorporate one or more barrier layers as is known in the art. For certain applications for example, it may be necessary to incorporate a barrier layer, i.e. a layer which is impermeable to gas and moisture, into the film structure. This can be achieved using conventional lamination techniques or by coextrusion.

In films or sheets comprising, preferably consisting of, layers (A), (B) and (C), layer (A) preferably forms 10 to 35 % of the thickness of the film, layer (B) forms 30 to 80 % of the thickness of the film and layer (C) preferably forms 10 to 35 % of the thickness of the film. In such films the layers (A) and, if present, (C) may be of equal thickness. Thus the film thickness distribution (%) of a ABC layer is preferably10-35%/30-80%/10-35% of the total film thickness (100%) after foaming.

The films/sheets of the invention exhibit remarkable properties.

In a film or sheet of the invention the final density of the monolayer film or sheet or the density of the foamed layer of the multilayer film or sheet is 600 to 850 kg/m³.

Any film or sheet of the invention may have a thickness of 50 to 1000, for film preferably 50 to 200 µm. Any foamed layer within such a film or sheet may have a thickness of 50 to 500, for film preferably 50 to 200 µm.

The foamed layer of said film or sheet is preferably foamed by at least 10wt%, such as at least 12 wt%. Maximum foaming may be 30 wt%, such as 25 wt%. Foam percentage is determined by comparing the foamed density to the prefoamed density of the blend.

The film of the invention may have a MD tensile modulus of at least 200 MPa such as 200 to 600 MPa.

The film of the invention may have a TD tensile modulus of at least 300 MPa such as 300 to 600 MPa.

### Film/sheet preparation

For film or sheet formation using polymer mixtures the different polymer components (e.g. within layers (A), (B) and optional (C)) are typically intimately mixed prior to extrusion and as is well known in the art. It is especially preferred to thoroughly blend the components, for example using a twin screw extruder, preferably a counter-rotating extruder prior to extrusion.

As to the first step of the preparation process, the layered structure of the film/sheet of the invention may be prepared by any conventional formation process including extrusion procedures. Monolayers films can be produced by extruding the same mixture in all 3 layers of the coextrusion. Films can be prepared by cast film or blown film processes.

The composition of the invention can be prepared by conventional mixing and the foaming agent added. This can be passed to an extruder. The extruder melts the composition of the invention to the proper viscosity so that it can absorb the gas generated by the foaming agent. The extruder also intimately mixes all components and maintains the composition of the invention under sufficient pressure so that the gas produced by decomposition of the foaming agent remains in solution in the mixture until the mixture is extruded.

Although the gas released by the foaming agent will plasticize the melt, the general extrusion parameters of the foamed composition will not change relative to a standard non-foamed composition. Therefore, suitable pressures for the extrusion process range from about 30 bar to about 300 bar. Suitable temperatures for the extrusion process range from about 170° C. to about 230° C.

Particularly preferably the multilayer film of layers (A), (B) and (C) are formed by blown film extrusion, more preferably by blown film coextrusion processes. Typically, the compositions providing layers (A), (B) and (C) will be blown (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

Thus, the invention provides a method for manufacturing a foamed article comprising:
providing a composition comprising 40 to 80 wt% of a linear low density polyethylene, 10 to 50 wt% of an LDPE, 2 to 49.9 wt% of at least one hydrocarbon resin and 0.1 to 15 wt% of a foaming agent component based on the weight of the composition;
processing the polymer composition by passing the polymer composition through an extruder and a die to form a foamed article, such as a film or sheet. In one embodiment the sheet is a multilayer sheet and the invention comprises the coextrusion of the composition so as to form the core layer B of an ABC sheet.

In one embodiment the film is a multilayer film and the invention comprises the coextrusion of the polymer composition so as to form the core layer B of an ABC film.

The films/sheets obtained by the processes of the invention can be used for packaging applications, such as sacks or bags in a known manner. Alternatively, the film may be further processed to tubular films which are either used directly in conventional vertical or horizontal form-fill-seal machines as well known in the art or are made into tubular films by conventional tube making machines and used thereafter in packaging. This may be carried out in-line during film production or off-line by conventional techniques. The tubular film can then be fed to a form, fill and seal (FFS) machine for use in packaging.

Film or sheets of the invention may be prepared from either flat die extrusion or blown film extrusion. Films prepared by flat die extrusion may be used for food packaging and stand up pouches. Flat die extruded sheets are ideal for thermoforming, e.g. trays. Films from circular dies may also be used in food packaging and stand up pouch applications. Sheets prepared from circular dies are ideal for membranes such as geomembranes and roofing membranes.

The invention will now be described with reference to the following non limiting examples and figures.

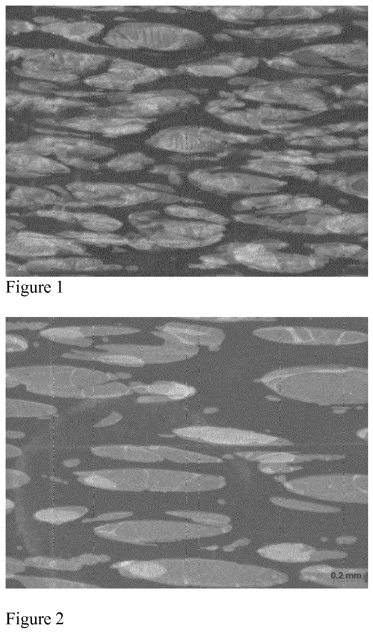

Figure 1 shows the cell structure for example C2 without the polyterpene. Figure 2 shows the cell structure of the inventive example with the polyterpene present.

### Determination Methods

### Melt Flow Rate

The melt flow rate (MFR) is determined according to ASTM D1238 and is indicated in g/10 min. The MFR is an indication of the melt viscosity of the polymer. The MFR is determined at 190°C for polyethylene. The load under which the melt flow rate is determined is usually indicated as a subscript, for instance MFR₂ is measured under 2.16 kg load, MFR₅ is measured under 5 kg load or MFR₂₁ is measured under 21.6 kg load. MFR_{21/2} is the ratio of MFR₂₁ / MFR₂. This is also called FRR_{21/2}.

### Density

Density of the polymer was measured according to ISO 1183-1:2004 Method A on compression moulded specimen prepared according to EN ISO 1872-2 (February 2007) and is given in kg/m³.

The foamed percentage is obtained from the division of the density on foamed film by the density on un-foamed film.

*Foaming ratio(%): (dᵢ-d_{f})*/*dᵢ × 100 (expresses weight density reduction ) where dᵢ is initial density and d_{f}is foamed density.*

To determine foamed density, a piece of film is cut along the width of the reel.

The film is folded in order to stack 12 layers of equal size.

A series of 12 disks is cut at once through the 12 layers, so that we have 12 different disks along the width of the film. Diameter of the disk is 24.9 mm.

Among the 12 disks, 4 best ones are selected, generally in the middle of the stack.

Multiplying the diameter with the measured thickness of each disks provides the volume of each 4 disks.

Each disk is weighed and the volumic mass of each disk is the division of the weight (gr) by the volume (cm3).

Dividing the volumic mass of each disk by the volumic mass of water (1gr/cm3), we get the density of each disk.

The density of the sample is defined by the average of the densities of the 4 disks.

### Molecular weight

Number average molecular weight (Mₙ), **weight average molecular weight** (M_{w}) and polydispersity (M_{w}/Mₙ) are determined by Gel Permeation Chromatography (GPC) according to the following method:
The weight average molecular weight Mw and the polydispersity (M_{w}/Mₙ, wherein Mₙ is the number average molecular weight and M_{w} is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilized with 200 mg/L 2,6-di tert butyl-4-methyl-phenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5-10 mg of polymer in 10 mL (at 160 °C) of stabilized TCB (same as mobile phase) and keeping for 3 hours with continuous shaking prior sampling in into the GPC instrument.

**Softening point** is measured according to ASTM-E28.

**Melt viscosity** is measured according to ASTM D-3236.

**Tensile test** (modulus, strain at break, stress at break, stress at yield, strain at yield in machine direction (MD) or transverse direction (TD)) is measured at 23 °C according to ISO 527-1 (with a specimen Type 2, 15 mm width at cross head speed 1 mm/min) and ISO 527-3 (with a specimen Type 2, 15 mm width at a speed of 200 mm/min) using 40 µm thick cast film.

Oxygen barrier property, i.e. **oxygen transmission rate (OTR)**, is determined on cast films having a thickness of 40 µm. The specimen is mounted as a sealed semi-barrier between two chambers at ambient atmospheric pressure. One chamber is slowly purged by a stream of nitrogen and hydrogen gas mixture (2% H₂ in N₂) at a given temperature and relative humidity and the other chamber is purged by a stream of oxygen at the same temperature and relative humidity as the N₂ stream. As oxygen gas permeates through the film into the nitrogen carrier gas, it is transported to the coulometric detector where it produces an electrical current, the magnitude of which is proportional to the amount of oxygen flowing into the detector per unit time. The oxygen transmission rate test is performed as per ASTM D 3985, at 23 °C and 0% relative humidity, with using 10 sccm of N₂/H₂ and O₂ (99.999%) gases and a film surface area of 1 cm2.

### Examples

The following materials are used in the examples:
A commercial multimodal butene LLDPE copolymer (grade FB2230 supplied by Borouge) of density 923 kg/m³ and Melt Flow Rate MFR₂ of 0.25 g/10min, a MFR_{21/2} of 88, with an Mw/Mn of 16 (polymer A).
A commercial LDPE polymer of density 923 kg/m³ and MFR₂ of 2.0 g/10min (LDPE-1) (grade FT6230 supplied by Borealis AG).
Clariant Hydrocerol CT3232 as foaming agent (supplied by Clariant as a masterbatch with carrier LDPE): Active ingredient 20 wt% of the MB.
Arkon P-125 is a hydrogenated hydrocarbon resin and is commercially available by Arakawa Chemical Industries, Ltd., Japan. The hydrocarbon resin has a softening point of 125 °C (ASTM E-28), a weight average molecular weight M_{w} of 1300 g/mol and a melt viscosity of 300 mPa.s at 200 °C as measured according to ASTM D-3236.

### Methods

3 layer ABA films are prepared with layer distribution 25/50/25 (before foaming). Polymer A was used alone in the A layers. The B layer is defined in table 1. All parameters are kept the same to visualize the effects of polyterpene on the film. Film preparation conditions are as follows:
Guangdong Jinming 3 Layer Co-extrusion Blown Film line:
Extruder: ϕ45mm / ϕ55mm / ϕ45mm
Screw: L/D: 30:1; Separation & Barrier type;
Die diameter: 180mm;
Die Gap: 1.8mm;
Machine Width: 800mm
Outer layer: Ext. A (°C): 190 to 210;
Core layer: Ext. B (°C): 170 to 210;
Inner layer: Ext. C (°C): 190 to 200

### Multilayer films

In Ex 3 a blend of 58wt% by weight of polymer A, 20% LDPE-1 and 20wt% of Arkon P-125 was prepared to which was added 2% by weight of a foaming agent component CT3232 (and hence 0.4 wt% of foaming agent). The mixture was introduced into the extruder. The melt including the dissolved gas was pulled from the die into the cooling tower by nip rollers. Concurrently, air was blown inside the film column to form a bubble. Other examples are prepared following the same protocol.

**Table 1**

| Ex | Core layer (B) | Outer/ inner Layers A | Final Thickness µm | Initial density^{∗} Kg/m³ dᵢ | Final density^{∗} Kg/m3 d_{f} | Core Foaming % |
|---|---|---|---|---|---|---|
| C1 | Poly A | Poly A | 99 | 923 | 921 | 0 |
| | | | | | | |
| C2 | 58 wt% Poly A 2 wt% of foaming agent 40% LDPE-1 | Poly A | 121 | 923 | 708 | 23 |
| IE1 | 58 wt% Poly A 20% LDPE-1 20wt% of Arkon P-125 and 2 wt% of foaming agent | Poly A | 102 | 923 | 785 | 15 |

| | | | | | | |
|---|---|---|---|---|---|---|
| ^{∗}Core layer | | | | | | |

**Table 2**

| Ex | OTR^{∗} | Cell size µm | MD tensile MPa | TD tensile Mpa |
|---|---|---|---|---|
| C1 | 159 | | 265 | 309 |
| C2 | 1451 | 600-170 | 191 | 234 |
| IE1 | 172 | 640-150 | 236 | 335 |

| | | | | |
|---|---|---|---|---|
| ^{∗}1 mm/ml/m² | | | | |

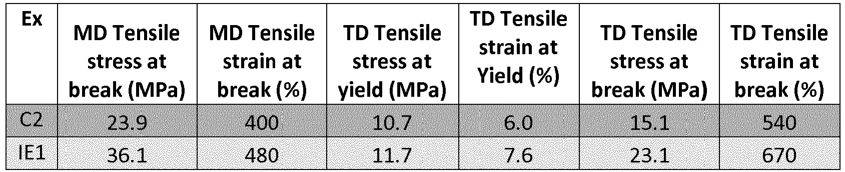

In order to show the importance of the polymer composition of the invention, the invention was compared to a composition in the absence of the hydrocarbon resin (C2). The use of polyterpene provides a better cell structure, where the cells are well separated from the polymer matrix. The use of polyterpene maintains OTR barrier properties. Without polyterpene, OTR of the foamed film increases by 900%. With 20% polyterpene, OTR has increased by 8% only. The use of polyterpene also helps in keeping good tensile properties in the foamed film. Finally, the use of polyterpene provides a smooth surface. Figure 2 depicts an improved cell structure for IE1 over C2 (fig. 1). This is very important for a good printability of the packaging. The well-known "orange peel" effect has disappeared with 20% of polyterpene without compromising on the output of the line or the foaming ratio.

## Claims

1. A polymer composition comprising 40 to 80 wt% of a linear low density polyethylene (LLDPE), 10 to 50 wt% of a low density polyethylene (LDPE), 2 to 49.9 wt% of at least one hydrocarbon resin and 0.1 to 15.0 wt% of foaming agent component based on the total amount (100wt%) of the polymer composition.

2. A polymer composition as claimed in any preceding claim wherein the LLDPE has a density of 915 to 935 kg/m³.

3. A polymer composition ass claimed in claim 1 or 2 wherein the foaming agent comprises sodium borohydride, ammonium carbonate, sodium bicarbonate, and modified sodium bicarbonate, e.g. sodium bicarbonate modified with a proton donor such as citric acid.

4. A foamed article comprising a polymer composition comprising 40 to 80 wt% of a linear low density polyethylene, 10 to 50 wt% of an LDPE and 2 to 50 wt% of at least one hydrocarbon resin based on the total amount (100wt%) of the polymer composition; or
a foamed layer element comprising 40 to 80 wt% of a linear low density polyethylene, 10 to 50 wt% of an LDPE and 2 to 50 wt% of at least one hydrocarbon resin.

5. A foamed layer element as claimed in claim 4 which is a foamed monolayer film or sheet or a foamed layer of a multilayer film or sheet.

6. A foamed layer element as claimed in claim 4 to 5 wherein the final density of the foamed element is 600 to 850 kg/m³.

7. A foamed layer element as claimed in claim 4 to 6 wherein the foamed layer element is foamed by 10 to 30 wt%.

8. A foamed layer element as claimed in claim 4 to 7 wherein the LLDPE has a density of 915 to 935 kg/m³.

9. A polymer composition as claimed in claim 1 to 3 or a foamed layer element as claimed in claim 4 to 8 wherein the LLDPE has an MFR₂ of 0.01 to 20 g/10min.

10. A polymer composition as claimed in claim 1 to 3 or a foamed layer element as claimed in claim 4 to 8 wherein the LLDPE is multimodal.

11. A polymer composition as claimed in claim 1 to 3 or a foamed layer element as claimed in claim 4 to 8 wherein the LLDPE has an Mw/Mn of 10 or more such as 10 to 30 or an MFR₂₁/MFR₂ of 50 to 200.

12. A polymer composition as claimed in claim 1 to 3 or a foamed layer element as claimed in claim 4 to 8 wherein the LDPE has a MFR₂ of 0.1-20 g/10 min.

13. A polymer composition as claimed in claim 1 to 3 or a foamed layer element as claimed in claim 4 to 8 wherein the LDPE a density of 915 to 935 kg/m³.

14. A polymer composition as claimed in claim 1 to 3 or a foamed layer element as claimed in claim 4 to 8 wherein the LLDPE has an MFR₂₁ of 10 to 200 g/10min.

15. A polymer composition as claimed in claim 1 to 3 or a foamed layer element as claimed in claim 4 to 8 wherein the hydrocarbon resin is a polyterpene.

16. A polymer composition as claimed in claim 1 to 3 or a foamed layer element as claimed in claim 4 to 8 wherein the hydrocarbon resin is an aliphatic C5 monomer based hydrocarbon resin which is fully hydrogenated

17. A foamed layer element as claimed in claim 5 in the form of a multilayer film or sheet comprising at least 3 layers, two outer layers and a core layer and wherein said core layer is foamed and comprises 40 to 80 wt% of a linear low density polyethylene, 10 to 50 wt% of an LDPE and 2 to 50 wt% of at least one hydrocarbon resin.

18. A film or sheet as claimed in claim 17 having a thickness of 50 to 1000 µm.

## Patentansprüche

1. Polymerzusammensetzung, die, bezogen auf die Gesamtmenge (100 Gew.-%) der Polymerzusammensetzung, zu 40 bis 80 Gew.-% ein lineares Polyethylen geringer Dichte (LLDPE), zu 10 bis 50 Gew.-% ein Polyethylen geringer Dichte (LDPE), zu 2 bis 49,9 Gew.-% mindestens ein Kohlenwasserstoffharz und zu 0,1 bis 15,0 Gew.-% eine Schäummittelkomponente umfasst.

2. Polymerzusammensetzung nach einem vorstehenden Anspruch, wobei das LLDPE eine Dichte von 915 bis 935 kg/m³ aufweist.

3. Polymerzusammensetzung nach Anspruch 1 oder 2, wobei das Schäummittel Natriumborhydrid, Ammoniumcarbonat, Natriumbicarbonat und modifiziertes Natriumbicarbonat, z. B. mit einem Protonendonator wie Zitronensäure modifiziertes Natriumbicarbonat, umfasst.

4. Schaumartikel, umfassend eine Polymerzusammensetzung, die, bezogen auf die Gesamtmenge (100 Gew.-%) der Polymerzusammensetzung, zu 40 bis 80 Gew.-% ein lineares Polyethylen geringer Dichte, zu 10 bis 50 Gew.-% ein LDPE und zu 2 bis 50 Gew.-% mindestens ein Kohlenwasserstoffharz umfasst; oder
ein Schaumschichtelement, das zu 40 bis 80 Gew.-% ein lineares Polyethylen geringer Dichte, zu 10 bis 50 Gew.-% ein LDPE und zu 2 bis 50 Gew.-% mindestens ein Kohlenwasserstoffharz umfasst.

5. Schaumschichtelement nach Anspruch 4, das eine Schaumeinzelschichtfolie oder - platte oder eine Schaumschicht einer mehrschichtigen Folie oder Platte ist.

6. Schaumschichtelement nach Anspruch 4 bis 5, wobei die endgültige Dichte des Schaumelements 600 bis 850 kg/m³ beträgt.

7. Schaumschichtelement nach Anspruch 4 bis 6, wobei das Schaumschichtelement zu 10 bis 30 Gew.-% geschäumt ist.

8. Schaumschichtelement nach Anspruch 4 bis 7, wobei das LLDPE eine Dichte von 915 bis 935 kg/m³ aufweist.

9. Polymerzusammensetzung nach Anspruch 1 bis 3 oder Schaumschichtelement nach Anspruch 4 bis 8, wobei das LLDPE eine MFR₂ von 0,01 bis 20 g/10 min aufweist.

10. Polymerzusammensetzung nach Anspruch 1 bis 3 oder Schaumschichtelement nach Anspruch 4 bis 8, wobei das LLDPE multimodal ist.

11. Polymerzusammensetzung nach Anspruch 1 bis 3 oder Schaumschichtelement nach Anspruch 4 bis 8, wobei das LLDPE ein Mw/Mn von 10 oder mehr, zum Beispiel 10 bis 30, oder eine MFR₂₁/MFR₂ von 50 bis 200 aufweist.

12. Polymerzusammensetzung nach Anspruch 1 bis 3 oder Schaumschichtelement nach Anspruch 4 bis 8, wobei das LDPE eine MFR₂ von 0,1 bis 20 g/10 min aufweist.

13. Polymerzusammensetzung nach Anspruch 1 bis 3 oder Schaumschichtelement nach Anspruch 4 bis 8, wobei das LDPE eine Dichte von 915 bis 935 kg/m³ aufweist.

14. Polymerzusammensetzung nach Anspruch 1 bis 3 oder Schaumschichtelement nach Anspruch 4 bis 8, wobei das LLDPE eine MFR₂₁ von 10 bis 200 g/10 min aufweist.

15. Polymerzusammensetzung nach Anspruch 1 bis 3 oder Schaumschichtelement nach Anspruch 4 bis 8, wobei das Kohlenwasserstoffharz ein Polyterpen ist.

16. Polymerzusammensetzung nach Anspruch 1 bis 3 oder Schaumschichtelement nach Anspruch 4 bis 8, wobei das Kohlenwasserstoffharz ein vollständig hydriertes Kohlenwasserstoffharz auf der Basis eines aliphatischen C5-Monomers ist.

17. Schaumschichtelement nach Anspruch 5 in Form einer mehrschichtigen Folie oder Platte, die mindestens 3 Schichten, zwei äußere Schichten und eine Kernschicht, umfasst, und wobei die Kernschicht geschäumt ist und zu 40 bis 80 Gew.-% ein lineares Polyethylen geringer Dichte, zu 10 bis 50 Gew.-% ein LDPE und zu 2 bis 50 Gew.-% mindestens ein Kohlenwasserstoffharz umfasst.

18. Folie oder Platte nach Anspruch 17, die eine Dicke von 50 bis 1.000 µm aufweist.

## Revendications

1. Composition polymère comprenant de 40 à 80% en poids d'un polyéthylène linéaire basse densité (LLDPE), de 10 à 50 % en poids d'un polyéthylène basse densité (LDPE), de 2 à 49,9 % en poids d'au moins une résine hydrocarbonée et de 0,1 à 15,0 % en poids de composant agent moussant sur la base de la quantité totale (100 % en poids) de la composition polymère.

2. Composition polymère selon une quelconque revendication précédente dans laquelle le LLDPE a une densité de 915 à 935 kg/m³.

3. Composition polymère selon la revendication 1 ou 2 dans laquelle l'agent moussant comprend du borohydrure de sodium, du carbonate d'ammonium, du bicarbonate de sodium, et du bicarbonate de sodium modifié, par exemple du bicarbonate de sodium modifié avec un donneur de protons tel que l'acide citrique.

4. Article expansé comprenant une composition polymère comprenant de 40 à 80 % en poids d'un polyéthylène linéaire basse densité, de 10 à 50 % en poids d'un LDPE et de 2 à 50 % en poids d'au moins une résine hydrocarbonée sur la base de la quantité totale (100 % en poids) de la composition polymère ; ou
un élément couche expansée comprenant de 40 à 80 % en poids d'un polyéthylène linéaire basse densité, de 10 à 50 % en poids d'un LDPE et de 2 à 50 % en poids d'au moins une résine hydrocarbonée.

5. Élément couche expansée selon la revendication 4 qui est une feuille ou un film monocouche expansé(e) ou une couche expansée d'un film ou d'une feuille multicouche.

6. Élément couche expansée selon la revendication 4 ou 5 dans lequel la densité finale de l'élément expansé est de 600 à 850 kg/m³.

7. Élément couche expansée selon les revendications 4 à 6 dans lequel l'élément couche expansée est expansé de 10 à 30 %.

8. Élément couche expansée selon les revendications 4 à 7 dans lequel le LLDPE a une densité de 915 à 935 kg/m³.

9. Composition polymère selon les revendications 1 à 3 ou élément couche expansée selon les revendications 4 à 8 dans lesquels le LLDPE a un MFR₂de 0,01 à 20 g/10 min.

10. Composition polymère selon les revendications 1 à 3 ou élément couche expansée selon les revendications 4 à 8 dans lesquels le LLDPE est multimodal.

11. Composition polymère selon les revendications 1 à 3 ou élément couche expansée selon les revendications 4 à 8 dans lesquels le LLDPE a un Mw/Mn de 10 ou plus par exemple de 10 à 30 ou un MFR₂₁/MFR₂ de 50 à 200.

12. Composition polymère selon les revendications 1 à 3 ou élément couche expansée selon les revendications 4 à 8 dans lesquels le LDPE a un MFR₂ de 0,1 à 20 g/10 min.

13. Composition polymère selon les revendications 1 à 3 ou élément couche expansée selon les revendications 4 à 8 dans lesquels le LDPE a une densité de 915 à 935 kg/m³.

14. Composition polymère selon les revendications 1 à 3 ou élément couche expansée selon les revendications 4 à 8 dans lesquels le LLDPE a un MFR₂₁ de 10 à 200 g/10 min.

15. Composition polymère selon les revendications 1 à 3 ou élément couche expansée selon les revendications 4 à 8 dans lesquels la résine hydrocarbonée est un polyterpène.

16. Composition polymère selon les revendications 1 à 3 ou élément couche expansée selon les revendications 4 à 8 dans lesquels la résine hydrocarbonée est une résine hydrocarbonée à base de monomère aliphatique en C5 qui est totalement hydrogénée.

17. Élément couche expansée selon la revendication 5 sous la forme d'un film ou d'une feuille multicouche comprenant au moins 3 couches, deux couches externes et une couche centrale et dans lequel ladite couche centrale est expansée et comprend de 40 à 80 % en poids d'un polyéthylène linéaire basse densité, de 10 à 50 % en poids d'un LDPE et de 2 à 50 % en poids d'au moins une résine hydrocarbonée.

18. Film ou feuille selon la revendication 17 ayant une épaisseur de 50 à 1000 µm.
